# EUROPEAN PATENT APPLICATION

(11) **EP 4 171 019 A1**
(43) Date of publication of application: **26.04.2023**
(21) Application number: 21829024.5
(22) Date of filing: 27.04.2021
(51) Int. Cl.: H04N 5/343, H04N 9/04

(54) **ELECTRONIC DEVICE COMPRISING IMAGE SENSOR, AND METHOD FOR CONTROLLING SAME**

(30) Priority: 23.06.2020 KR 20200076669
(71) Applicant: Samsung Electronics Co., Ltd., Gyeonggi-do 16677 (KR)
(72) Inventor: KIM, Dongsoo, Suwon-si, Gyeonggi-do 16677 (KR); KANG, Hwayong, Suwon-si, Gyeonggi-do 16677 (KR); PARK, Jaehyoung, Suwon-si, Gyeonggi-do 16677 (KR); USUI, Takafumi, Suwon-si, Gyeonggi-do 16677 (KR); YOON, Youngkwon, Suwon-si, Gyeonggi-do 16677 (KR)
(74) Representative: HGF
(86) International application number: PCT/KR2021/005304
(87) International publication number: WO 2021/261737

(57) **Abstract**

An electronic device may set a first output mode having a first resolution and a second output mode having a second resolution lower than the first resolution. An image sensor may provide one color value corresponding to each of a plurality of pixels to a processor in the first mode having the first resolution, and provide two or more color values representing a unit pixel including a first number of pixels to the processor through a designated interface in the second mode having the second resolution lower than the first resolution. After receiving the color value, the processor may perform a demosaic process in the first mode, but may omit the demosaic process in the second mode. If the demosaic process is omitted in the second output mode, color reproducibility can be improved by minimizing color errors or color distortion, and clear image quality can be provided by minimizing image distortion. Various other embodiments identified through the specification are possible.

## Description

### [Technical Field]

The disclosure relates to an electronic device including an image sensor.

### [Background Art]

In general, in a case of a mobile terminal, a charge coupled device (CCD), a complementary metal oxide semiconductor (CMOS), or the like uses an image sensor. Such an image sensor detects a brightness value of light, and thus an image acquired through the sensor is a black-and-white image rather than a color image. Accordingly, to acquire a color image, a color filter array (hereinafter, referred to as "CFA") which allows red (R), green (G), and blue (B) color components to pass is disposed in each pixel of the sensor, and each pixel of the sensor detects channel values of R, G, and B color signals having passed through the CFA. In each pixel of a single image sensor, only information on one color (e.g., R) corresponding to a color filter, among color information of various channels, is acquired, and thus a processor calculates all color information (e.g., R, G, and B) of a pixel through interpolation from color information of surrounding pixels. This process is known as a demosaic process.

### [Disclosure of Invention]

### [Technical Problem]

When performing a demosaic process, a processor fails to effectively consider edge information of an image and may not well consider a correlation between channels, and thus during color interpolation, interpolation acquiring a totally different color from an original color is performed at the edge such as the contour or border of an object, which may cause a false color error corresponding to a phenomenon in which some pixels do not match with the surroundings and stand out, or colorful color distortion such as a rainbow in a pattern area such as a plaid pattern image.

Accordingly, the disclosure may provide an image processing method for acquiring an image having an enhanced quality by generating image data by means of actual data of a pixel, without performing a demosaic process for color values of a pixel by a processor by outputting two or more color values for each pixel through a color value combination of a pixel by an image sensor if an image having a normal resolution rather than a high resolution is required.

The technical problems to be solved in the disclosure are not limited to the technical problems mentioned above, and other unmentioned technical problems can be clearly understood from the description below by those skilled in the art to which the disclosure belongs.

### [Technical Solution]

According to an embodiment, an electronic device may include a color filter array including multiple pixels, an image sensor including the color filter array, and a processor connected to the image sensor and a designated interface. The image sensor of the electronic device may provide one color value corresponding to each of the multiple pixels to the processor in a first output mode having a first resolution, and may provide two or more color values representing a unit pixel including a first number of pixels to the processor through the designated interface in a second output mode having a second resolution lower than the first resolution. The processor may perform a demosaic process by using the provided color value corresponding to each of the multiple pixels in the first output mode, and may perform image processing by omitting the demosaic process and display the image in the second output mode.

### [Advantageous Effects of Invention]

According to various embodiments, in an output mode having a relatively low resolution, a color error or color distortion is minimized, whereby color reproducibility can be increased.

In addition, according to various embodiments, distortion of an image is minimized, whereby a clear image quality can be provided.

In addition, according to various embodiments, in an output mode having a relatively low resolution, processing performed by a process is partly omitted, whereby processing speed and power consumption can be enhanced.

### [Brief Description of Drawings]

FIG. 1 is a block diagram illustrating an electronic device in a network environment according to various embodiments.
FIG. 2 is a block diagram illustrating a camera module according to various embodiments.
FIG. 3 illustrates structures of an electronic device and a camera module according to an embodiment.
FIG. 4 is a flowchart illustrating a process of outputting a color value by an image sensor according to an embodiment.
FIG. 5 illustrates outputting all of R, G, and B in a unit pixel of an image sensor according to an embodiment.
FIG. 6 is a flowchart illustrating a process in an image signal processor according to a resolution according to an embodiment.
FIG. 7 is a flowchart illustrating an image processing process in an image sensor and an image signal processor according to an embodiment.
FIG. 8 is a flowchart illustrating a process of outputting a color value by an image sensor according to an embodiment.
FIG. 9 illustrates a process of outputting a color value by an image sensor according to an embodiment.
FIG. 10 illustrates a process of outputting a color value by an image sensor according to an embodiment.
FIG. 11 illustrates a process of outputting a color value by an image sensor according to an embodiment.

### [Mode for Carrying out the Invention]

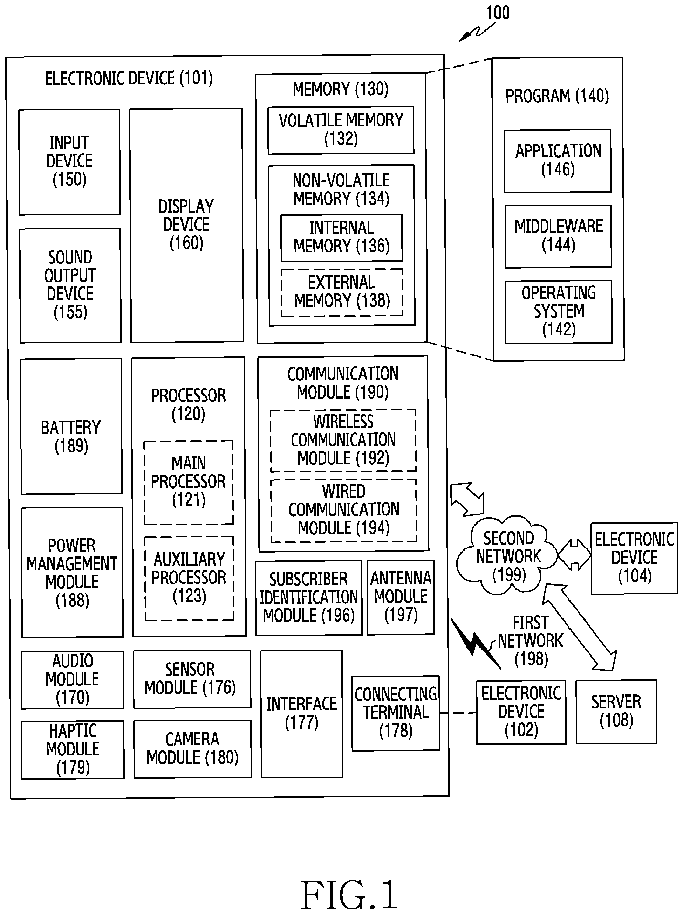

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by another component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

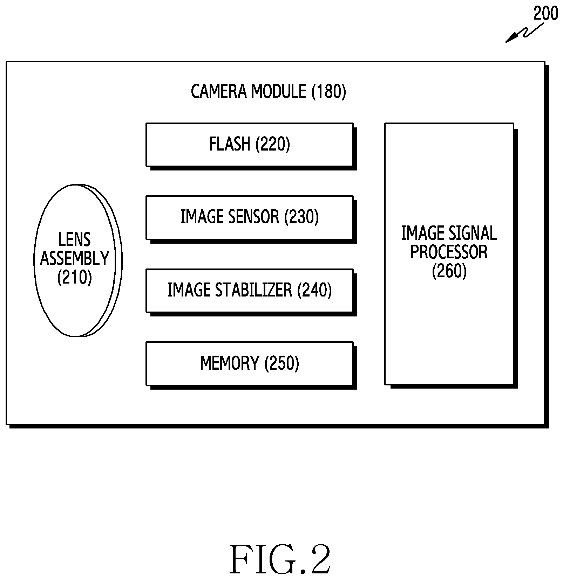

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

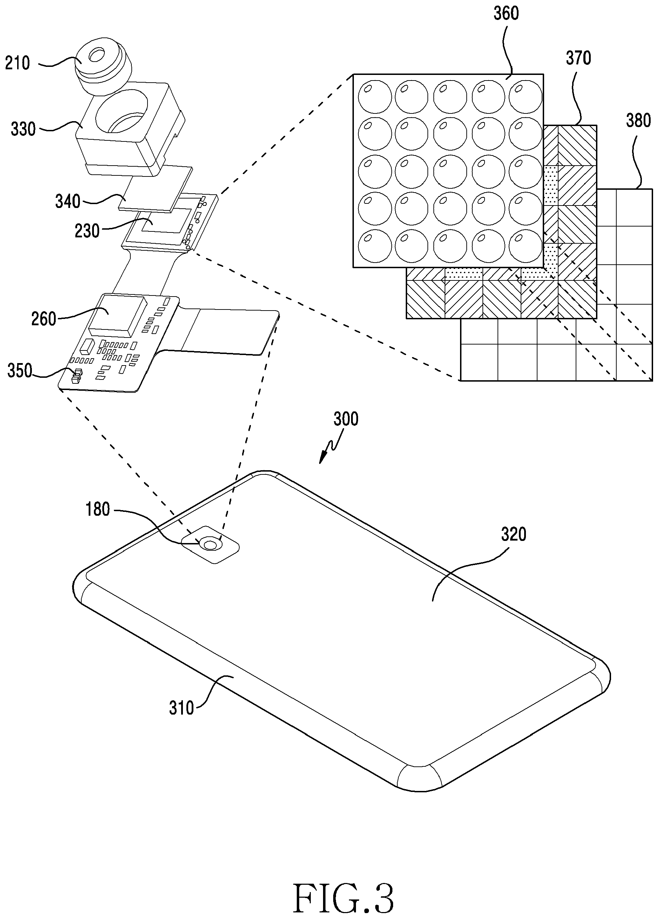

FIG. 3 illustrates structures of an electronic device 300 and a camera module 180 according to an embodiment.

FIG. 3 schematically illustrates an exterior of an electronic device 300 (e.g., the electronic device 101 of FIG. 1) having a camera module 180 mounted therein, and the camera module 180 according to an embodiment of the disclosure. An embodiment of FIG. 3 is illustrated and described based on a mobile device, specifically, a smartphone, but it will be understood by those skilled in the art that the embodiment is applicable to an electronic device equipped with a camera, among various electronic devices or mobile devices.

Referring to FIG. 3, the electronic device 300 according to an embodiment may include a body 310, a rear cover 320, and a camera module 180. In the embodiment of FIG. 3, the camera module 180 is positioned on the rear surface of the electronic device 300, on which the rear cover 320 is disposed, but in various embodiments, the camera module 180 may be disposed at at least one of various locations (e.g., a front surface, a rear surface, a side surface, or the like) of the body 310. For example, FIG. 3 illustrates that the camera module 180 is positioned at the upper center of the electronic device 300, but the camera module 180 may be disposed toward the upper right side of the electronic device 300, or may be disposed toward the upper left side of the electronic device. In addition, the camera module 180 may be disposed at the middle part of the electronic device 300, and may be disposed at the lower part of the electronic device 300.

In an embodiment, the electronic device 300 may further include a speaker, a receiver, a front camera, a proximity sensor, a home key, etc. The rear cover 320 of the electronic device 300 according to an embodiment may be integrated with the body 310. In another embodiment, the rear cover 320 may be separated from the body 310 of the electronic device 300, and may have a form enabling replacing of a battery. The rear cover 320 may be referred to as a battery cover or a back face cover.

The above-described locations of the camera module 180 are merely provided as an embodiment, and the camera module 180 may be disposed on a front surface as well as a rear surface of the electronic device 300. In addition, to improve performance of a camera, the electronic device 300 may have multiple camera modules as well as one camera module 180. For example, the electronic device 300 may further include a front camera for a video call or capturing a self-portrait image. The front camera may support relatively lower-resolution pixels than a rear camera module. The front camera may be relatively smaller than the rear camera module.

In an embodiment, the camera module 180 may include a printed circuit board having an image sensor (e.g., the image sensor 230 of FIG. 2) safely mounted thereon, a barrel for mounting at least one lens aligned on an optical axis, a housing 330 for mounting at least one coil surrounding the circumference of the barrel with reference to the optical axis. The image sensor 230 may be safely mounted on the top of the printed circuit board, and the printed circuit board may be connected to an image signal processor 260 connected to a printed circuit board 350 through a connector. A flexible printed circuit board (FPCB), a cable, or the like may be used as the connector.

In an embodiment, the image sensor 230 may have multiple individual integrated pixels, and each individual pixel may include a micro lens 360, a color filter, and a photodiode 380. Each individual pixel, as a kind of a photodetector, may convert input light into an electric signal. In general, the photodetector cannot detect wavelengths of captured light by itself and cannot determine color information. The photodetector may include a photodiode.

In an embodiment, the image sensor 230 may include a complementary metal oxide semiconductor (CMOS) sensor, a charge coupled device (CCD) sensor, and the like. Information of light of a subject, incident through a lens assembly 210 may be converted into an electric signal by the image sensor 230, and input to the image processor 260. An infrared cut filter (hereinafter, referred to as an "IR cut filter") 340 may be disposed on the top of the image sensor 230, and a part of an image of the subject, which has passed through a lens, may be filtered by the IR cut filter 340, and may be detected by the image sensor 230.

In an embodiment, the image sensor 230 may include a micro lens 360, a color filter array (CFA) 370, and a photodiode 380. The micro lens 360 may concentrate light to each individual pixel. The color filter array 370 may overlap with each individual pixel of the image sensor 230, and may include an array of small color filters, each of which can filter light captured by wavelengths. In response to incident light, the photodiode 380 may generate electrons and generate analog signals. In various embodiments, the color filter array 370 may use a Bayer color filter array (CFA), but there is no intention to limit the currently described technologies in relation thereto. The color filter array 370 may be formed of a Bayer pattern, a tetra pattern, a nona pattern (3x3), a 4x4 pattern, a diamond pattern, etc. Those skilled in the art would recognize that the image processing technologies provided herein are applicable to a predetermined appropriate type of color filter array 370 including RGBW filters, CYGM filters, etc. According to various embodiments, each individual pixel of the image sensor 230 may have a color value through the color filter array 370. Normally, the image sensor 230 includes multiple individual pixels and an output circuit, the multiple individual pixels generate an electric signal corresponding to the intensity of light incident to each of the multiple individual pixels, and a color value of an individual pixel corresponding to the color filter array 370 is output through the output circuit. The disclosure includes details of an output color value of each individual pixel, and the details will be described in the following drawings.

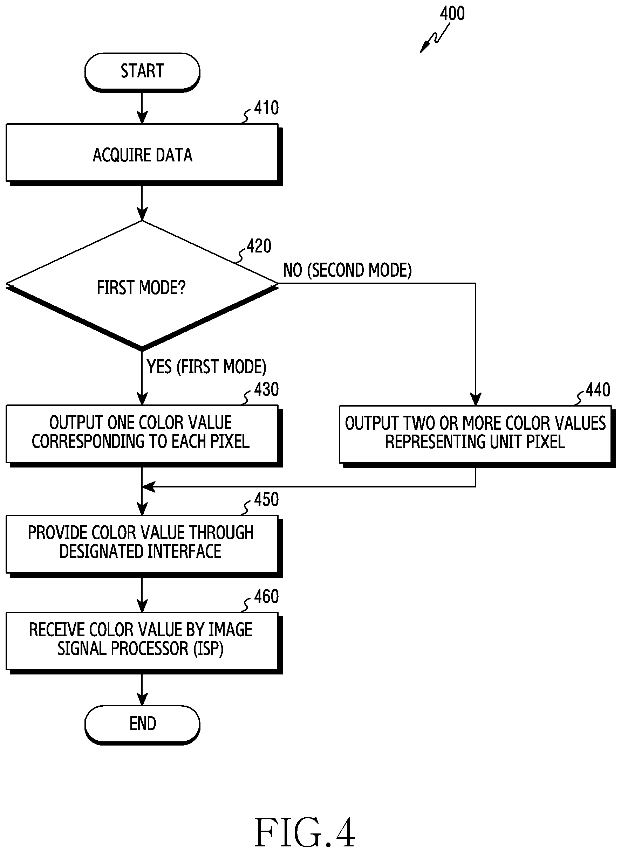

FIG. 4 is a flowchart 400 illustrating a process of outputting a color value by an image sensor 230 according to an embodiment.

According to an embodiment, in operation 410, a processor (e.g., the processor 120 of FIG. 1) may acquire data. The data may mean data of a resolution of an image. The data of the resolution may be data of at least one of an illuminance value, a zoom magnification value, and a resolution value directly configured by a user.

In an embodiment, the electronic device 300 may have an output mode of the image sensor 230, which has a high resolution if the zoom magnification value is equal to or greater than a first magnification value. The electronic device 300 may have an output mode of the image sensor 230, which has a normal resolution if the zoom magnification value is less than the first magnification value. The zoom magnification value may be configured upon a user input.

In an embodiment, the electronic device 300 may determine an ambient illuminance state and change the resolution. When the illuminance value is equal to or greater than a first illuminance value, the electronic device 300 may have an output mode of the image sensor, which has a high resolution. When the illuminance value is less than the first illuminance value, the electronic device 300 may have an output mode of the image sensor 230, which has a normal resolution. The high resolution may mean a first resolution, and the normal resolution may mean a second resolution. The processor 120 may configure a photographing resolution according to the ambient illuminance state.

In an embodiment, the electronic device 300 may have at least one output mode in response to the resolution value directly configured by the user. For example, in a case where the user captures a still image or a moving image, the electronic device 300 may have a first mode or a second mode of a photographing resolution in response to a user input of configuring a desired resolution. When acquiring the data of the resolution, the processor 120 may determine whether the first resolution is required or the second resolution is required, based on the data. The normal resolution mentioned in the disclosure may include a resolution corresponding to a case where the illuminance value is less than the first illuminance value or the zoom magnification value is less than the first magnification value, and may include a low resolution.

According to an embodiment, in operation 420, the processor 120 may determine whether the mode is a first mode having the first resolution. When the processor 120 acquires the data of the resolution in operation 410, the processor 120 may determine a required resolution, based on the data. A first mode may mean a first output mode of the image sensor, which has the first resolution. When the mode is not the first mode, the output mode of the image sensor 230 may correspond to a second mode having the second resolution. The second mode may mean a second output mode of the image sensor 230, which has the second resolution. The second resolution may mean a resolution lower than the first resolution.

In an embodiment, the electronic device 300 may perform operation 430 in the first mode, and perform operation 440 in the second mode.

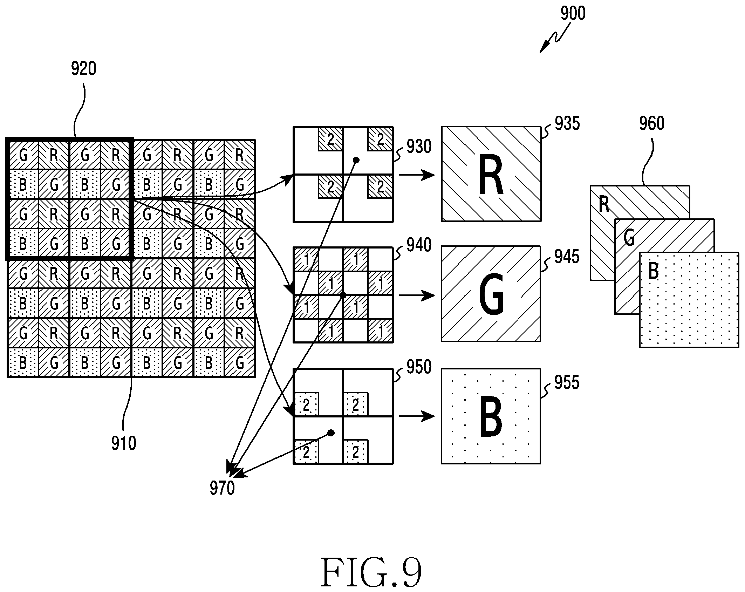

According to an embodiment, in operation 430, when the output mode of the image sensor 230 is the first mode having the first resolution, the image sensor 230 may output one color value corresponding each individual pixel. The image sensor 230 may further include a color filter array 370 which can be overlaid or disposed over a pixel array of the image sensor 230 to capture color information. The color filter array 370 may include an array of small color filters, each of which can overlap with each individual pixel of the image sensor 230 and filter light captured by a wavelength. The image sensor 230 may provide information on the intensity and the wavelength of light captured through a camera, to the processor 120 through photodetectors arranged together with the color filter array 370. The image sensor 230 may indicate an image through the information on the captured light. In an embodiment, the color filter array 370 may include a Bayer color filter array which provides a filter pattern including 50% of green elements, 25% of red elements, and 25% of blue elements. The color filter array 370 may mean, for example, a color filter array (e.g., 910 of FIG. 9) having Bayer patterns repeatedly formed, wherein each of the Bayer patterns is a 2×2 pixel pattern including two green elements, one red element, and one blue element. Accordingly, the image sensor 230 using the Bayer color filter array may acquire information on the intensity of light received by a lens assembly 210, based on green, red, and blue wavelengths, and each individual pixel may acquire information on one of three colors (RGB). The RGB is merely provided as an example of a color value, and a color value is not limited thereto. The one color value may be at least one of red, green, blue, yellow, emerald, white, cyan, and magenta. According to various embodiments, the color filter array 370 may include a color filter array having a red, green, blue, and emerald (RGBE) pattern, a cyan, yellow, and magenta (CYYM) pattern, a cyan yellow, green, and magenta (CYGM), or a red, green, blue, and white (RGBW) pattern.

According to an embodiment, in operation 440, in a case of the second mode having the second resolution, the image sensor 230 may output two or more color values representing a unit pixel. The unit pixel may mean a group of individual pixels, which is acquired by grouping individual pixels to output two or more designated color values of the unit pixel. The designated color value may include red, green, and blue (RGB), and cyan, magenta, and yellow (CMY).

According to an embodiment, the size of the unit pixel may be determined based on a difference between the resolution of the image sensor 230 and an output resolution. When the electronic device 300 outputs an image having resolution a through the image sensor having resolution (a × k²), the unit pixel may include k² pixels. The shape in which the unit pixel includes k² pixels may be quadrangular or non-quadrangular. When the shape of the unit pixel is quadrangular, the unit pixel may include k² pixels corresponding to a k × k pattern. For example, when the electronic device 300 outputs an image having a 12 Mp resolution through an image sensor having a 196 Mp resolution, one unit pixel may include 16 individual pixels. In other words, in a case of a tetra cell image sensor, a unit pixel may include four tetra cells, and the number of individual pixels included in the unit pixel may be 16. In a case of a Bayer image sensor, a unit pixel may include four Bayer patterns, and the number of individual pixels included in the unit pixel may be 16. An area of the unit pixel is not limited to the description above, and may be differently configured according to color types and patterns of individual pixels. For example, a unit pixel may be configured as a 3x3 shape, a 4x4 shape, a diamond shape, etc.

According to an embodiment, the unit pixel may include four individual pixels (e.g., four green pixels) corresponding to one tetra cell pattern, and 12 individual pixels surrounding the four individual pixels.

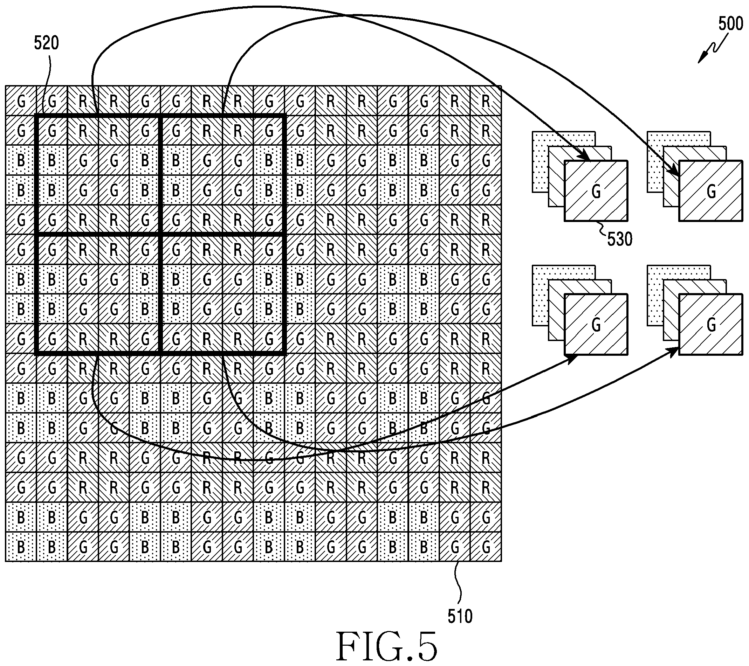

According to an embodiment, the unit pixel may include four Bayer patterns. The four Bayer patterns may form a 4x4 pixels structure (e.g., 920 of FIG. 9). The image sensor 230 may output, as color values for a unit pixel including 16 individual pixels, two or more average values among an average value of red color values, an average value of green color values, and an average value of blue color values, which are detected through individual pixels in the unit pixel. As the color value for the unit pixel, there may be a weighted sum of respective values, in addition to the above-described average value of the respective color values. The weighted sum may be derived through a weighted function used when acquiring a sum, integral, or average value, and this may be applied the same to the description below. A detailed description of operation 440 will be made in FIG. 5 below.

According to an embodiment, in operation 450, the image sensor 230 may provide color values of pixels through a designated interface. The designated interface may be an interface determined to reinforce reuse and compatibility in mobile and IoT devices by a mobile industry processor interface (MIPI). The designated interface may include a data link for connecting the image sensor 230 and an image signal processor 260. Color values of pixels output from the image sensor 230 may be transmitted to the image signal processor 260 through the interface to perform image processing. When data is transmitted through the interface, the processor 120 may occupy a predetermined bandwidth. In the first mode having the first resolution, the image sensor 230 may transmit unprocessed image data (raw image data) to the image signal processor 260 through the interface. In the second mode having the second resolution, as described in the drawing below, the image sensor 230 may transmit a color value by combining color values of pixels to the image signal processor 260 through the interface.

According to an embodiment, in operation 460, the image signal processor 260 may receive a color value of a pixel. The image signal processor 260 may receive a color value of a pixel, output from the image sensor 230. The image signal processor 260 may receive a color value of a pixel through the designated interface. The image signal processor 260 may receive a color value corresponding to each individual pixel for each individual pixel in the first mode having the first resolution, and receive two or more color values representing a unit pixel in the second mode having the second resolution.

FIG. 5 is a drawing 500 illustrating outputting of two or more of R, G, and B in a unit pixel of an image sensor 230 according to an embodiment.

The image sensor (e.g., the image sensor 230 of FIG. 2) is in a second output mode having a second resolution, the image sensor 230 may output two or more color values representing a unit pixel. In addition to acquisition of one color value corresponding to individual pixels, the image sensor 230 may configure a unit pixel area, and output two or more color values by using the acquired color values of the individual pixels in the unit pixel. The unit pixel may include four individual pixels (e.g., four green pixels) corresponding to one tetra cell pattern, and 12 individual pixels surrounding the four individual pixels. The unit pixel may include four Bayer patterns. The four Bayer patterns may form a 4x4 pixels structure (e.g., 920 of FIG. 9). The image sensor 230 may output, as color values for a unit pixel 520 including 16 individual pixels, two or more average values among an average value of red color values, an average value of green color values, and an average value of blue color values, which are detected through individual pixels in the unit pixel. The unit pixel outputting the two or more color values is not limited to a specific unit pixel, and consequently, may correspond to all unit pixels included in the image sensor 230. Accordingly, the image sensor 230 may output two or more color values for a unit pixel, rather than one color value corresponding to one individual pixel. In addition, the tetra cell pattern is merely provided as an example, and a pattern type is not limited thereto. According to various embodiments, the pattern type may include a Bayer pattern, a red, green, blue, and emerald (RGBE) pattern, a cyan, yellow, and magenta (CCYM) pattern, a cyan, yellow, green, and magenta (CYGM) pattern, a red, green, blue, and white (RGBW) pattern, or the like. In FIG. 5, the unit pixel is described as an area of 16 individual pixels, but when a value corresponding to this area is actually made, a color value of a pixel corresponding to an area narrower or wider than this area may be used. For example, the unit pixel is an area of nine individual pixels, but may correspond to an area of 25 individual pixels.

When there are several unit pixels, the respective unit pixels may overlap with each other. For example, individual pixels constituting each of the unit pixels may overlap with each other. Specifically, one or more individual pixels may be redundantly included in both a first unit pixel including 16 individual pixels and a second unit pixel including 16 individual pixels.

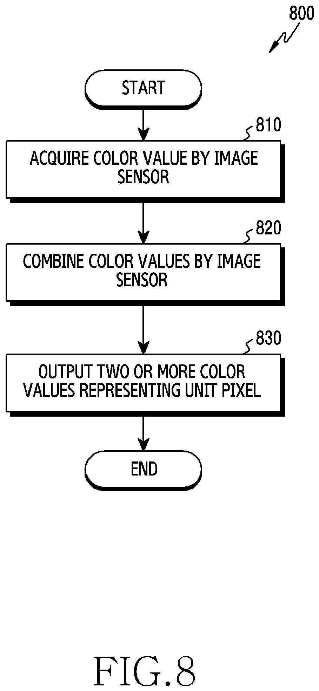

A description of a combination or an output process of two or more color values representing a unit pixel will be made in FIGS. 8 to 11 below.

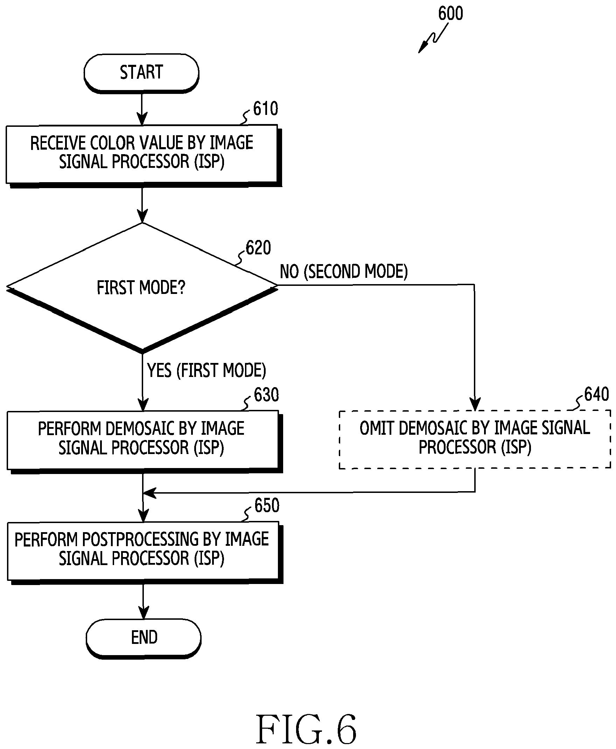

FIG. 6 is a flowchart 600 illustrating a process of an image signal processor 260 according to a resolution according to an embodiment.

According to an embodiment, in operation 610, an image signal processor (ISP) 260 may receive a color value of a pixel. The image signal processor 260 may receive a color value of a pixel, output from an image sensor 230. The image signal processor 260 may receive a color value of a pixel through the designated interface. The image signal processor 260 may receive one color value corresponding to each individual pixel for each individual pixel in a first mode having a first resolution, and receive two or more color values representing a unit pixel in a second mode having a second resolution.

According to an embodiment, in operation 620, the electronic device 300 may determine whether the mode is a first mode having a first resolution. When the processor 120 acquires data of the resolution in operation 410, the processor 120 may determine a required resolution, based on the data. The data of the resolution may include at least one of a zoom magnification value, an illuminance value, and a resolution continuation value of a user.

In an embodiment, the electronic device 300 may perform operation 630 in a case of the first mode, and may perform operation 640 in a case of a second mode which is not the first mode.

According to an embodiment, in operation 630, the image signal processor 260 may perform a demosaic process. The image sensor 230 may generate only information relating to one color corresponding to a color filter array 370, in a given individual pixel. The color image may be represented by combining three individual single-color images, and the processor 120 may require all red, blue, and green color values in each individual pixel to display the color image. However, in general, an individual pixel outputs one color value, and thus the image signal processor 260 may use a technique of estimating or interpolating the remaining two missing colors from an ambient individual pixel so as to acquire the missing colors. Such a kind of estimation and interpolation technique may be referred to as demosaic. Such a demosaic process may be performed by the image signal processor 260. Each individual pixel in demosaic image data may include a color value of an individual pixel for an original pixel color and an interpolated color value of a pixel of an adjacent color of an individual pixel. The demosaic process performed in operation 630 may include various types of demosaic techniques including bilinear interpolation, median filtering, vector CFA, gradient-based and statistical modeling, etc. However, the above-mentioned demosaic techniques are not intended to identify main features or necessary features of the claimed subject matter, and are not intended to be used to limit the scope of the claimed subject matter.

According to an embodiment, in operation 640, the processor 120 may omit the demosaic process. The processor 120 may include the image signal processor 260. In the second mode having the second resolution, the image signal processor 260 may omit the demosaic process which has been performed in operation 630.

According to an embodiment, in operation 650, the image signal processor 260 may perform postprocessing. Image processing performed before the demosaic process may be called preprocessing, and image processing performed after the demosaic process may be call postprocessing. The preprocessing may include 3A processing, lens shading correction, dead pixel correction, and knee correction. The 3A processing may include at least one of auto white balance (AWB), auto exposure (AE), and auto focusing (AF). In the preprocessing, noise processing processes, and the like, in the first mode and the second mode may be different. The image signal processor 260 may perform postprocessing which is a stage following the demosaic process. The image signal processor 260 may perform postprocessing after the demosaic process in case of the first mode, and may omit the demosaic process and perform the postprocessing in a case of the second mode. The postprocessing may include at least one of sensor index value change, tuning parameter change, and screen ratio adjustment. The postprocessing may include a process of processing image data output from the image sensor 230 or image data output from a scaler. The image signal processor 260 may adjust the contrast, sharpness, saturation, dithering, and the like of an image through the postprocessing. Here, the contrast, sharpness, and saturation adjustment procedures may be executed in a YUV color space, and the dithering procedure may be executed in a red, green, and blue (RGB) color space. The image signal processor 260 may transmit the image data acquired after the postprocessing to a display buffer. A display (e.g., the display device 160 of FIG. 1) may display image data stored in the display buffer to a display screen upon control by the processor 120.

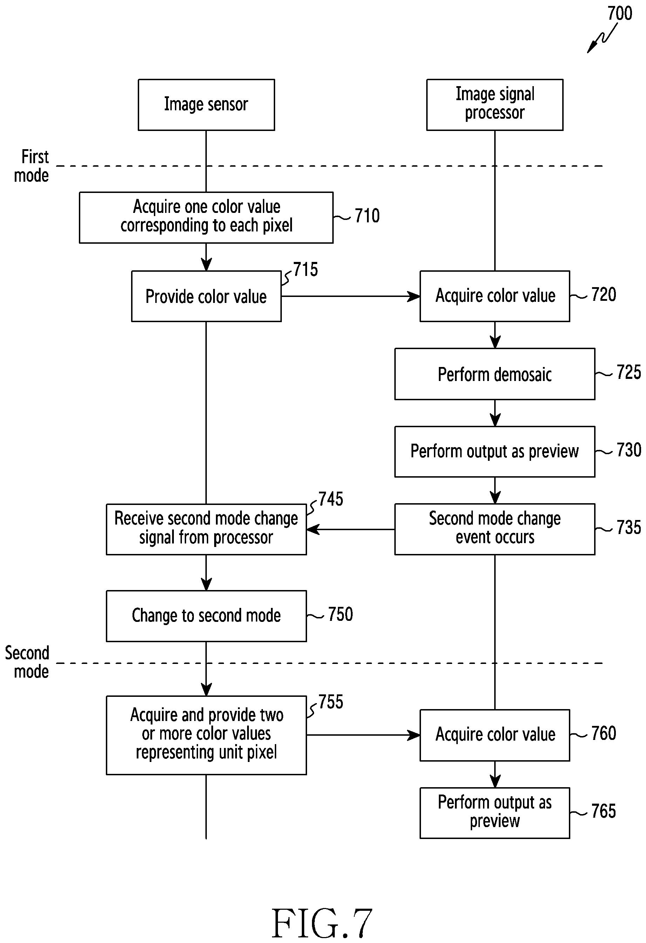

FIG. 7 is a flowchart 700 illustrating image processing processes of an image sensor 230 and an image signal processor 260 according to an embodiment.

According to an embodiment, in operation 710, the image sensor 230 may acquire one color value corresponding to each pixel in a first mode. In a case of a first mode having a first resolution, the image sensor 230 may output one color value corresponding to each individual pixel. The image sensor 230 may further include a color filter array (CFA) 370 which can be overlaid or disposed over a pixel array of the image sensor 230 to capture color information. The color filter array 370 may include an array of small color filters, each of which can overlap with each individual pixel of the image sensor 230 and filter light captured by a wavelength. Accordingly, when the color filter array 370 and photodetectors are used together, the color filter array and the photodetectors may provide information on both the intensity and the wavelength of light captured through a camera, and the information may indicate a captured image. In an embodiment, the color filter array 370 may include a Bayer color filter array which provides a filter pattern including 50% of green elements, 25% of red elements, and 25% of blue elements. The color filter array 370 may mean, for example, a color filter array (e.g., 910 of FIG. 9) having Bayer patterns repeatedly formed, wherein each of the Bayer patterns is a 2×2 pixel pattern including two green elements, one red element, and one blue element. The image sensor 230 using the Bayer color filter array may acquire information on the intensity of light received by a lens assembly 210, based on green, red, and blue wavelengths, and each individual pixel may acquire information on one of three colors (RGB). The RGB is merely provided as an example of a color value, and a color value is not limited thereto. The one color value may be at least one of red, green, blue, yellow, emerald, white, cyan, and magenta. According to various embodiments, the color filter array 370 may include a color filter array having a red, green, blue, and emerald (RGBE) pattern, a cyan, yellow, and magenta (CYYM) pattern, a cyan yellow, green, and magenta (CYGM), or a red, green, blue, and white (RGBW) pattern.

According to an embodiment, in operation 715, the image sensor 230 may provide the color value to the image signal processor 260 in the first mode. The image sensor 230 may acquire one color value corresponding to each individual pixel in the first mode to provide the color value to the image signal processor 260 through a designated interface. When data (e.g., a color value) is "provided" from one element (e.g., the image sensor 230) to another element (e.g., the image signal processor 260), the one element may directly provide the data to another element, and may also provide the data to another element through at least one another element. In this process, the processor 120 may occupy a predetermined bandwidth. A bandwidth occupancy amount in the first mode may be different from a bandwidth occupancy amount in the second mode.

According to an embodiment, in operation 720, the image signal processor 260 may acquire a color value, and the image signal processor 260 may receive and acquire a color value output from the image sensor 230. For example, the image signal processor 260 may receive a stream of Bayer pixels.

According to an embodiment, in operation 725, the image signal processor 260 may perform a demosaic process in the first mode. Operation 725 may correspond to operation 630 of FIG. 6.

According to an embodiment, in operation 730, the image signal processor 260 may output an image as a preview. The image signal processor 260 may perform postprocessing (e.g., operation 650 of FIG. 6) after performing the demosaic process, and output an image to which postprocessing is applied, as a preview. The electronic device 300 may perform postprocessing of information acquired through the image sensor 230 and generate an image. The electronic device 300 may display a preview image including the generated image on a display (e.g., the display device 160 of FIG. 1). For example, in a case where a user executes a camera application to operate a camera, a user uses a face recognition function, or a user makes a video call, when a sensor output from the image sensor 230 is received in the image signal processor (ISP) 260, the electronic device 300 may output a frame generated based on the sensor output, as a preview.

According to an embodiment, in operation 735, a second mode change event may occur.

In an embodiment, the second mode change event may be an event of changing the mode from a first mode to a second mode. The second mode change event may occur by data acquired by a processor (e.g., the processor 120 of FIG. 1). The data may mean data of the resolution of an image. The data of the resolution may be data of at least one of an illuminance value or a zoom magnification value. For example, when the zoom magnification value is changed from a value equal to or greater than a first magnification value to a value less than the first magnification value, the electronic device 300 may determine that a second resolution corresponding to a normal resolution or a low resolution is required. When an ambient illuminance state is changed from a first illuminance value to a value less than the first illuminance value, the electronic device 300 may determine that the second resolution is required. When the second mode change event occurs due to the change in at least one of the illuminance value and the zoom magnification value, the electronic device 300 may determine that the second resolution is required.

According to an embodiment, in operation 745, the image sensor 230 may receive a second mode change signal. When the second mode change event occurs, a processor (e.g., the processor 120 of FIG. 1) may provide the image sensor 230 with the second mode change signal through the designated interface. The image sensor 230 may receive the second mode change signal provided by the processor 120, through the designated interface.

According to an embodiment, in operation 750, the image sensor 230 may change the mode to the second mode. The image sensor 230 may change the mode to a second output mode having a second resolution. The image sensor 230 may change the mode from a first output mode having a first resolution to a second output mode having a second resolution.

According to an embodiment, in operation 755, in the second mode, the image sensor 230 may acquire and provide two or more color values representing a unit pixel. Operation 755 is described in detail in operations 810 to 840, and thus a description thereof is omitted here.

According to an embodiment, in operation 760, the image signal processor 260 may acquire a color value. The image signal processor 260 may receive and acquire a color value output from the image sensor 230, through a designated interface.

According to an embodiment, in operation 765, the image signal processor 260 may output an image as a preview. The image signal processor 260 may omit a demosaic process and then perform postprocessing (e.g., operation 650 of FIG. 6) in the second mode having the second resolution, and output an image to which the postprocessing is applied, as a preview. The electronic device 300 may generate an image by omitting the demosaic process and performing postprocessing of information acquired through the image sensor 230. The electronic device 300 may display a preview image including the generated image on a display (e.g., the display device 160 of FIG. 1). For example, in a case where a user executes a camera application and operates a camera, a user uses a face recognition function, or a user makes a video call, the electronic device, when a sensor output from the image sensor 230 is received in the image signal processor (ISP) 260, the electronic device 300 may output a frame generated based on the sensor output, as a preview.

FIG. 8 is a flowchart 800 illustrating a process of outputting a color value by an image sensor 230 according to an embodiment. Specifically, FIG. 8 is a flowchart illustrating a process of outputting a color value when an image sensor 230 is in a second mode.

According to an embodiment, in operation 810, an image sensor 230 may acquire color values of pixels. The image sensor 230 may acquire color values of pixels in accordance with a pattern of a color filter array 370 positioned on the top surface of a pixel array. The image sensor 230 may acquire a color value corresponding to each individual pixel of the color filter array 370. The image sensor 230 may detect a pixel signal of each individual pixel. The pixel signal may include at least one color value.

According to an embodiment, in operation 820, the image sensor 230 may combine color values of respective individual pixels. The image sensor 230 may combine the acquired color values of the individual pixels. The image sensor 230 may combine color values of individual pixels by using binning, skipping, and weighting techniques. For example, binning may include analog binning of outputting an average value of color values of respective individual pixels by using an analog circuit, and digital binning of converting, into a single color value, color values of multiple individual pixels, converted into digital signals, by using a predetermined formula. The binning may include averaging groups adjacent to the same color pixels in each frame of unprocessed image data to generate an effective second resolution sensor output mode. For example, the electronic device 300 may include averaging individual pixels forming a repeated pattern and color values of 12 individual pixels surrounding the individual pixels, so as to generate a second output mode having a second resolution. In another example, skipping may mean skipping signals of some of the multiple individual pixels. When some pixel signals are selected and the others are skipped, a frame rate may increase. In another example, weighting may mean weighting a color value of an individual pixel included in a unit pixel. Color values of individual pixels corresponding to the color filter array 370 may have different weights. The image sensor 230 may calculate a color value of each color corresponding to the unit pixel in consideration of a weight calculated for each color value. The calculated color value may include two or more colors. The image sensor 230 may output two or more color values (e.g., green) from a unit pixel.

According to an embodiment, in operation 830, the image sensor 230 may output two or more color values representing a unit pixel.

The image sensor 230 may output two or more color values representing a unit pixel. The unit pixel may include four individual pixels (e.g., four green pixels) corresponding to a tetra cell pattern and 12 individual pixels surrounding the four individual pixels. The unit pixel may include four Bayer patterns. The four Bayer patterns may for a 4 × 4 pixel structure (e.g., 920 of FIG. 9). The image sensor 230 may output, as color values for a unit pixel including 16 individual pixels, two or more average values among an average value of red color values, an average value of green color values, and an average value of blue color values, which are detected through individual pixels in the unit pixel. Through operation 830, the electronic device 300 may minimize a false color error occurring at the edge such as the contour or border of an object, or colorful color distortion such as a rainbow in a pattern area such as a plaid pattern image.

Hereinafter, various examples of grouping the individual pixels and output a color value are described in FIGS. 9 to 11.

FIG. 9 is a drawing 900 illustrating a process of combining color values by an image sensor 230 according to an embodiment.

Color values of four individual pixels corresponding to the color filter array 370 may form a repeated pattern (e.g., a Bayer pattern) in a two-dimensional space. As illustrated in FIG. 9, the image sensor 230 may group 4 × 4 pixels. A unit pixel 920 obtained by grouping the 4 × 4 pixels may include 16 individual pixels.

According to an embodiment, each color (e.g., red) value in the unit pixel may have a weight value. Referring to operation 930, a weight of a red color value corresponding to each individual pixel may be 2/8. Referring to operation 940, a weight of a green color value corresponding to each individual pixel may be 1/8. Referring to operation 950, a weight of a blue color value corresponding to each individual pixel may be 2/8. The sum of weights of respective color values in the unit pixel may be 1. The image sensor 230 may acquire an average value in the unit pixel in consideration of the weight of one color value corresponding to each individual pixel. The image sensor 230 may output, as color values 960 for a unit pixel 920 including 16 individual pixels, two or more average values among an average value 935 of red color values, an average value 945 of green color values, and an average value 955 of blue color values, which are detected through individual pixels in the unit pixel.

In an embodiment, even though the sum of weights of the respective color values of individual pixels included in the unit pixel is 1, if the center 970 of the respective color values of the individual pixels is placed toward one side, a color value representing the unit pixel 920 cannot be accurately output. To accurately output a color value representing the unit pixel 920, the center of individual pixels of the same color may be within a distance of one pixel from the center of the unit pixel.

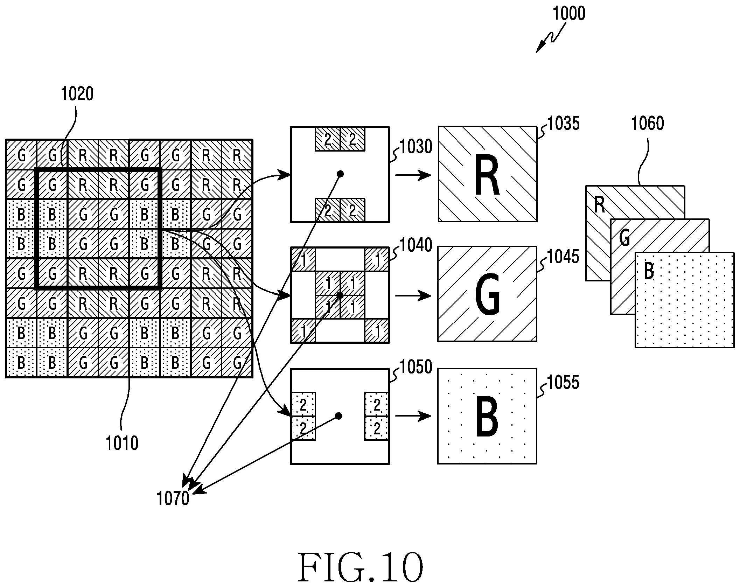

FIG. 10 is a drawing 1000 illustrating a process of combining color values by an image sensor according to an embodiment.

Color values of four individual pixels corresponding to a color filter array may form a repeated pattern (e.g., a tetra cell pattern) 1010 in a second-dimensional space. As illustrated in FIG. 10, the image sensor 230 may group 4x4 pixels. A unit pixel 1020 obtained by grouping the 4 × 4 pixels may include 16 individual pixels. The unit pixel 1020 may include four individual pixels (e.g., four green pixels) corresponding to one tetra cell pattern and 12 individual pixels surrounding the four individual pixels. The unit pixel 1020 may include 16 individual pixels.

According to an embodiment, each color (e.g., red) value in the unit pixel may have a weight value. Referring to operation 1030, a weight of a red color value corresponding to each individual pixel may be 2/8. Referring to operation 1040, a weight of a green color value corresponding to each individual pixel may be 1/8. Referring to operation 1050, a weight of a blue color value corresponding to each individual pixel may be 2/8. The sum of weights of respective color values in the unit pixel may be 1. The image sensor 230 may acquire an average value in the unit pixel in consideration of the weight of one color value corresponding to each individual pixel. The image sensor 230 may output, as color values 1060 for a unit pixel 1020 including 16 individual pixels, two or more average values among an average value 1035 of red color values, an average value 1045 of green color values, and an average value 1055 of blue color values, which are detected through individual pixels in the unit pixel.

In an embodiment, even though the sum of weights of the respective color values of individual pixels included in the unit pixel is 1, if the center 1070 of the respective color values of the individual pixels is placed toward one side, a color value representing the unit pixel 1020 cannot be accurately output. To accurately output a color value representing the unit pixel 1020, the center of individual pixels of the same color may be within a distance of one pixel from the center of the unit pixel.

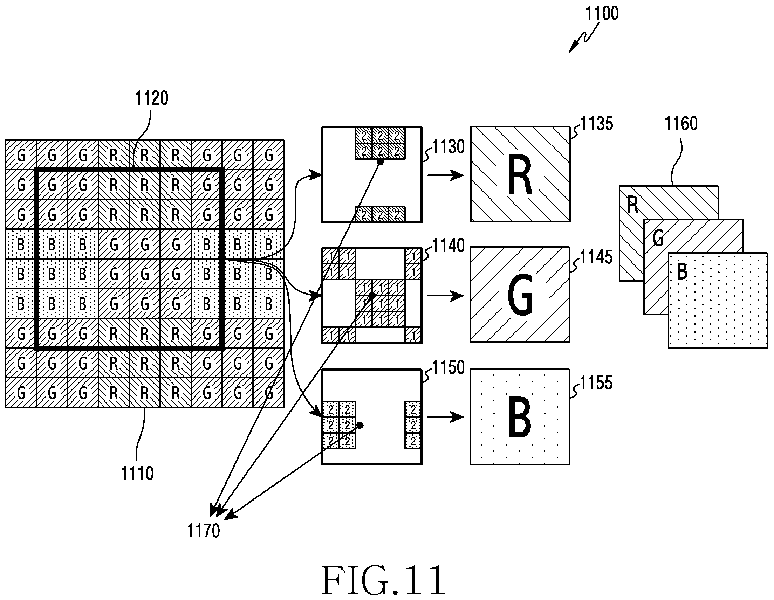

FIG. 11 is a drawing 1100 illustrating a process of combining color values by an image sensor according to an embodiment.

Color values of nine individual pixels corresponding to a color filter array may form a repeated pattern 1010 in a two-dimensional space. As illustrated in FIG. 11, the image sensor 230 may group 6 × 6 pixels. A unit pixel 1120 obtained by grouping the 6 × 6 pixels may include 36 individual pixels.

According to an embodiment, each color (e.g., red) value in the unit pixel may have a weight value. Referring to operation 1130, a weight of a red color value corresponding to each individual pixel may be 2/18. Referring to operation 1140, a weight of a green color value corresponding to each individual pixel may be 1/18. Referring to operation 1050, a weight of a blue color value corresponding to each individual pixel may be 2/18. The sum of weights of respective color values in the unit pixel may be 1. The image sensor 230 may acquire an average value in the unit pixel in consideration of the weight of one color value corresponding to each individual pixel. The image sensor 230 may output, as color values 1160 for a unit pixel 1120 including 36 individual pixels, two or more average values among an average value 1135 of red color values, an average value 1145 of green color values, and an average value 1155 of blue color values, which are detected through individual pixels in the unit pixel.

In an embodiment, even though the sum of weights of the respective color values of individual pixels included in the unit pixel is 1, if the center 1170 of the respective color values of the individual pixels is placed toward one side, a color value representing the unit pixel 1120 cannot be accurately output. To accurately output a color value representing the unit pixel 1120, the center of individual pixels of the same color may be within a distance of one pixel from the center of the unit pixel. The center may mean the center of the weights allocated to individual pixels of the same color, or the center of gravity for the weights of individual pixels of the same color. The center may be calculated in the manner of a weighted arithmetic mean.

An electronic device 300 according to various embodiments may include a color filter array including multiple pixels, an image sensor including the color filter array, and a processor connected to the image sensor and a designated interface. The image sensor may provide a color value corresponding to each of the multiple pixels to the processor in a first output mode having a first resolution, and may provide two or more color values representing a unit pixel including a first number of pixels to the processor through the designated interface in a second output mode having a second resolution lower than the first resolution. The first output mode may output an image having the first resolution, and the second output mode may output an image having the second resolution.

In an embodiment, the processor may perform a demosaic process by using the provided color value corresponding to each of the multiple pixels in the first output mode, and may omit the demosaic process in the second output mode.

In an embodiment, the processor may include an image signal processor (ISP).

In an embodiment, the color filter array may include a Bayer pattern.

In an embodiment, the unit pixel may include 16 pixels corresponding to four Bayer patterns.

In an embodiment, the color filter array may include a tetra cell pattern.

In an embodiment, the unit pixel may include k² pixels corresponding to a k × k pattern.

In an embodiment, the unit pixel may at least include a first unit pixel and a second unit pixel, and at least a pixel included in the first unit pixel may overlap with at least a pixel included in the second unit pixel.

In an embodiment, in the second output mode, the image sensor may at least use a binning, skipping, or weighting technique to output two or more color values corresponding to the unit pixel.

In an embodiment, the color value may include red (R), green (G), or blue (B).

In an embodiment, when the demosaic process is omitted, a part of the process prior to the demosaic process may be changed.

In an embodiment, the image sensor may determine a first color value corresponding to the unit pixel of a first color, based on locations and the number of pixels corresponding to the first color, among the first number of pixels included in the unit pixel, and may determine a second color value corresponding to the unit pixel of a second color, based on locations and the number of pixels corresponding to the second color, among the first number of pixels included in the unit pixel.

A control method of an electronic device 300 according to various embodiments may include providing, through an image sensor including a color filter array, a color value corresponding to each of the multiple pixels to a processor through a designated interface in a first output mode having a first resolution, and providing two or more color values representing a unit pixel including a first number of pixels to the processor through the designated interface in a second output mode having a second resolution lower than the first resolution. The processor may receive a color value through the designated interface.

In an embodiment, the control method of the electronic device 300 may cause the processor to perform a demosaic process by using the provided color value corresponding to each of the multiple pixels in the first output mode, and to omit the demosaic process in the second output mode.

In an embodiment, the provision to the processor may include providing the designated color value to an image signal processor (ISP).

In an embodiment, the color filter array of the control method of the electronic device 300 may include a Bayer pattern.

In an embodiment, the unit pixel of the control method of the electronic device 300 may include 16 pixels corresponding to four Bayer patterns.

In an embodiment, the color filter array of the control method of the electronic device 300 may include a tetra cell pattern.

In an embodiment, the unit pixel may include k² pixels corresponding to a k × k pattern.

In an embodiment, the control method of the electronic device 300 may cause the image sensor to determine a first color value corresponding to the unit pixel of the first color, based on locations and the number of pixels corresponding to the first color, among the first number of pixels included in the unit pixel, and to determine a second color value corresponding to the unit pixel of the second color, based on locations and the number of pixels corresponding to the second color, among the first number of pixels included in the unit pixel.

In an embodiment, in the control method of the electronic device 300, when the processor 120 omits the demosaic process, a part of the process prior to the demosaic process may be changed.

In the above-described detailed embodiments of the disclosure, the elements included in the disclosure are expressed in the singular or plural form depending on the proposed detailed embodiment. However, the singular or plural expression has been suitably selected for a proposed situation for convenience of description, and the disclosure is not limited to the singular or plural elements. Although an element has been expressed in the plural form, it may be configured in the singular form. Although an element has been expressed in the singular form, it may be configured in the plural form.

While the disclosure has been described in relation to the exemplary embodiments thereof, various changes and modifications can be made without departing from the scope of the disclosure. Therefore, the scope of the disclosure should be not construed as being limited to the described exemplary embodiments but be defined by the appended claims as well as equivalents thereto.

## Claims

1. An electronic device comprising:
a color filter array comprising multiple pixels;
an image sensor comprising the color filter array; and
a processor connected to the image sensor and a designated interface,
wherein the image sensor is configured to:
provide, through a pixel included in the multiple pixels, a color value corresponding to the pixel to the processor in a first output mode in which a first resolution is output; and
provide, through a unit pixel, two or more color values corresponding to the unit pixel, to the processor through the designated interface in a second output mode in which a second resolution lower than the first resolution is output, and
wherein the unit pixel is configured to correspond to the second resolution and comprises two or more of the multiple pixels.

2. The electronic device of claim 1, wherein the processor is configured to perform a demosaic process by using the provided color value corresponding to each of the multiple pixels in the first output mode, and
to omit the demosaic process in the second output mode.

3. The electronic device of claim 1, wherein the processor comprises an image signal processor (ISP).

4. The electronic device of claim 1, wherein the color filter array comprises a Bayer pattern or a tetra cell pattern.

5. The electronic device of claim 1, wherein the unit pixel at least comprises a first unit pixel and a second unit pixel, and at least a pixel included in the first unit pixel overlaps with at least a pixel included in the second unit pixel.

6. The electronic device of claim 1, wherein in the second output mode, the image sensor at least uses a binning, a skipping, or a weighting technique to output two or more color values corresponding to the unit pixel.

7. The electronic device of claim 1, wherein the color value comprises red (R), green (G), or blue (B).

8. The electronic device of claim 1, wherein the image sensor is configured to:
determine a first color value corresponding to the unit pixel of a first color , based on locations and the number of pixels corresponding to the first color included in the unit pixel; and
determine a second color value corresponding to the unit pixel of a second color, based on locations and the number of pixels corresponding to the second color included in the unit pixel.

9. A control method of an electronic device, the method comprising:
providing, through an image sensor comprising a color filter array comprising multiple pixels, a color value corresponding to each of the multiple pixels to a processor through a designated interface in a first output mode having a first resolution;
providing two or more color values representing a unit pixel comprising a first number of pixels to the processor through the designated interface in a second output mode having a second resolution lower than the first resolution; and
receiving a color value through the designated interface by the processor.

10. The method of claim 9, comprising:
performing a demosaic process by using the provided color value corresponding to each of the multiple pixels in the first output mode; and
omitting the demosaic process in the second output mode.

11. The method of claim 9, wherein the color filter array comprises a Bayer pattern or a tetra cell pattern.

12. The method of claim 9, wherein the unit pixels at least comprise a first unit pixel and a second unit pixel, and at least a pixel included in the first unit pixel overlaps with at least a pixel included in the second unit pixel.

13. The method of claim 9, wherein in the second output mode, the image sensor at least uses a binning, a skipping, or a weighting technique to output two or more color values corresponding to the unit pixel.

14. The method of claim 9, wherein the color value comprises red (R), green (G), or blue (B).

15. The method of claim 9, wherein the image sensor is configured to:
determine a first color value corresponding to the unit pixel of a first color, based on locations and the number of pixels corresponding to the first color, among the first number of pixels included in the unit pixel; and
determine a second color value corresponding to the unit pixel of a second color, based on locations and the number of pixels corresponding to the second color, among the first number of pixels included in the unit pixel.
